# EUROPÄISCHE PATENTSCHRIFT

(11) **EP 0 386 530 B1**
(45) Veröffentlichungstag und Bekanntmachung des Hinweises auf die Patenterteilung: **21.04.1993**
(21) Anmeldenummer: 90103369.6
(22) Anmeldetag: 22.02.1990
(51) Int. Cl.: B65B 53/06

(54) **Schrumpfrahmen mit elektrischer Beheizung**
Shrinking frame with electric heating elements
Appareil de rétraction à chauffage électrique

(30) Priorität: 10.03.1989 DE 8902969 U; 14.11.1989 DE 8913441 U
(43) Veröffentlichungstag der Anmeldung: 12.09.1990
(73) Patentinhaber: MSK-Verpackungs-Systeme Gesellschaft mit beschränkter Haftung, D-47515 Kleve (DE)
(72) Erfinder: Hannen, Reiner Wilhelm, D-4180 Goch 2 - Pfalzdorf (DE); Vermeulen, Norbert Peter, D-4190 Kleve-Warbeyen (DE); Schulze-Frenking, Josef, D-4190 Kleve (DE)
(74) Vertreter: Stark, Walter, Dr.-Ing.

(56) Entgegenhaltungen:
- DE-A- 2 125 568
- DE-B- 2 002 786
- GB-A- 1 062 349
- US-A- 4 719 332

## Beschreibung

Die Erfindung betrifft einen Schrumpfrahmen mit einem an ein Gebläse anschließbaren Lufteinlaß, daran anschließenden Luftführungskanälen, in denen elektrisch beheizbare Heizelemente angeordnet sind, und mit einem an den Innenseiten des Schrumpfrahmens angeordneten Luftauslaß für die Heißluft.

Derartige Schrumpfrahmen werden eingesetzt zum Schrumpfen von Schrumpfhauben oder Schrumpffolien, die einen Gutstapel umgeben. Die Schrumpfrahmen bestehen aus Rahmenholmen, die eine mittige Öffnung umgeben, welche so groß ist, daß der Schrumpfrahmen, den Gutstapel umgebend, auf- und niederbewegt werden kann, wobei die aus dem Luftauslaß austretende Heißluft die Schrumpfhaube oder Schrumpffolie schrumpft.

Ein Schrumpfrahmen der eingangs beschriebenen Gattung (DE-A-1 611 861) weist einen Gebläsemotor und in dessen Nähe einen Kasten mit elektrischer Heizeinrichtung auf. Damit steht der zu erwärmenden Luft nur ein verhältnismäßig kurzer Strömungsweg zur Verfügung. Die erwärmte Luft wird durch die Rahmenholme zu den Austrittssstellen geleitet, wobei sie sich unterschiedlich abkühlt, so daß ein gleichmäßiges Schrumpfen der Schrumpfhaube über dem Gutstapel nicht gewährleistet ist.

Aufgabe der Erfindung ist es, einen Schrumpfrahmen der eingangs beschriebenen Gattung so zu verbessern, daß ausreichend lange Strömungswege für die Erhitzung der Luft mit elektrisch beheizten Heizelementen zur Verfügung steht.

Diese Aufgabe wird gelöst mit einem gattungsgemäßen Schrumpfrahmen, der gekennzeichnet ist durch einen einseitig offenen Schacht im Rahmen mit einer darin angeordneten Trennwand, die von der Schachtöffnung ausgeht und mit Abstand vor dem geschlossenen Schachtende endet, wobei zur Bildung eines U-förmigen Strömungsweges ein zwischen der Trennwand und einer Schachtwand gebildeter Abschnitt des Strömungsweges an den Lufteinlaß und der andere Abschnitt an den Luftauslaß angeschlossen ist, und wobei die Heizelemente als Heizstäbe ausgebildet sind, die sich in Längsrichtung des Schachtes erstrecken und die an wenigstens zwei Schotten abgestützt sind, welche zwischen der Trennwand und den Schachtenden angeordnet sind. Ein U-förmiger Strömungsweg läßt sich auch in verhältnismäßig kleinen Querschnitten der Rahmenholme unterbringen, so daß für die zu erhitzende Luft genügend Zeit zur Verfügung steht, die von den Heizelementen abgegebene Wärme aufzunehmen. Die damit verbundene Umlenkung der Luftströmung führt außerdem zu einer intensiven Verwirbelung des Luftstromes, so daß auch eine gleichmäßige Erhitzung der Luft gewährleistet ist. Da die Schotten sich in Strömungsrichtung erstrecken, behindern sie die Strömung selbst nicht. Andererseits teilen sie die im Schacht gebildeten Strömungswege in mehrere Teilabschnitte, so daß es zweckmäßig sein kann, möglichst viele Schotten anzuordnen. Da die Schachtwände und die Trennwand ebenfalls von der Wärmestrahlung der Heizelemente beaufschlagt sind, geben sie ihrerseits Wärmestrahlung ab und tragen so zum Wärmetausch bei. Der Schacht kann insbesondere außenseitig in Isoliermaterial eingebettet sein.

Die Heizstäbe werden in üblicher Weise an eine elektrische Versorgung angeschlossen. Vorzugsweise werden gleichpolige Anschlußenden der Heizstäbe elektrisch leitend miteinander verbunden, z.B. durch Stromschienen.

Die Heizstäbe können auch U-förmig ausgebildet sein, so daß die beiden Anschlußstäbe jedes Heizstabes auf einer Seite angeordnet sind. Auch dann können die gleichpoligen Anschlußenden benachbarter Heizstäbe durch Stromschienen miteinander verbunden sein. Diese Anordnung hat Vorteile im Hinblick auf die elektrische Ausrüstung und Verkabelung des Schrumpfrahmens.

Bei einer bevorzugten Ausführung sind die Heizstäbe bzw ihre U-Schenkel in einer Querschnittsprojektion des Schachtes unter einem Winkel zur Trennwand angeordnet, wobei der Abstand der Stabmitten gleich oder größer als der zweifache Stabdurchmesser ist. Das ermöglicht eine dichte Anordnung von mehreren Heizstäben. innerhalb der im Schacht gebildeten Abschnitte des Strömungsweges und damit auch eine hohe Leistungsdichte für die Wärmeübertragung.

Vorzugsweise sollte der Schacht aufrecht stehend mit unten angeordneter Schachtöffnung im Rahmen angeordnet sein. Der Schacht kann aber auch horizontal liegen oder unter einem Winkel zur Horizontalen im Rahmen angeordnet sein.

Der Luftauslaß ist zweckmäßig als sich längs der Innenseiten des Rahmens erstreckende Schlitzdüse ausgebildet, die beidseitig von Leitblechen begrenzt ist, die unter einem Winkel zur Rahmenebene angeordnet sind, wobei zwischen der Schlitzdüse und dem Schacht ein Strömungskanalabschnitt angeordnet ist, der einen direkten Austritt der von den Heizstäben abgegebenen Wärmestrahlung verhindert. Dadurch wird eine unmittelbare Beaufschlagung der zu schrumpfenden Haube oder Folie durch die von den Heizstäben abgegebene Wärmestrahlung unterbunden.Die Ausblasrichtung der Heißluft kann den gegebenen Verhältnissen angepaßt werden, wenn die Winkelstellung zumindest eines der Leitbleche veränderbar ist.

Da nicht alle Gutstapel gleiche Abmessungen besitzen, kann es zweckmäßig sein, am Rahmen in Richtung auf den Gutstapel verstellbare Luftstauelemente anzuordnen, die verhindern, daß die aus der Schlitzdüse austretende Heizluft ungenutzt abströmt.

Eine bessere Nutzung des Wärmeinhalts der Heißluft wird auch dann erreicht, wenn der Rahmen senkrechte Wände als Heißluftführung aufweist.

Schließlich kann auf dem Rahmen auch eine Haube angeordnet sein, in der die Heißluft während der Stillstandszeit gespeichert wird, so daß während des Arbeitstaktes ein größeres Heißluftvolumen direkt an die Haube oder Folie herangebracht werden kann.

Die aufzuheizende Frischluft wird zweckmäßig über einen im Außenbereich des Rahmens angeordneten, vom Lufteinlaß ausgehenden Luftverteilkanal an den Schacht herangeführt. Dieser Luftverteilkanal weist Luftübergangsöffnungen zu den zwischen den Schotten gebildeten Teilkanälen auf. Wenn die Größe der Luftübergangsöffnungen veränderbar ist, können die Teilkanäle mit unterschiedlichen Luftmengen versorgt werden, so daß dementsprechend über die Länge der Schlitzdüse unterschiedliche Heißluftmengen austreten.

Ein Schrumpfrahmen, bei dem die Heizstäbe in den Schrumpfrahmen integriert sind und der sich durch geringe Wärmespannungen sowie montagefreundlichen Aufbau auszeichnet, ist dadurch gekennzeichnet, daß die Heizstäbe sich im wesentlichen parallel zu den Rahmenseiten erstrecken und in wärmeisolierten Heizkernen mit Luftführungskanälen angeordnet sind, wobei die Heizstäbe mit einem Ende an den Heizkernen befestigt sind und im übrigen nach Maßgabe ihrer Wärmeausdehnung in den Heizkernen verschiebbar sind. Mit der Anordnung der Heizstäbe in den Heizkernen ergibt sich ein montagefreundlicher Aufbau, weil die Heizkerne zu Reparaturzwecken leicht aus dem Schrumpfrahmen entfernt werden können. Die nur einseitige Befestigung der Heizstäbe in den Heizkernen stellt sicher, daß wärmebedingte Verspannungen nicht mehr auftreten. Auch das trägt zur Montagefreundlichkeit bei.

Bei einer bevorzugten Ausführung weisen die Heizkerne Haltestangen auf, die sich in Richtung der Rahmenseiten erstrecken und die an einem Ende an einem Festlagerblech befestigt sind sowie am anderen Ende in einem Loslagerblech geführt sind. Mit dem Festlagerblech und dem Loslagerblech werden die Heizkerne im Schrumpfrahmen abgestützt. Da die Haltestangen, die zum tragenden System der Heizkerne gehören, im Loslagerblech nur geführt, aber nicht befestigt sind, können auch die Haltestangen sich ausdehnen, ohne dadurch Spannungen in den übrigen Teilen der Heizkerne zu verursachen. Auch die Heizstäbe können am Festlagerblech befestigt sein und im übrigen an Schottblechen abgestützt sein, die von den Haltestangen getragen sind. Gegenüber den Schottblechen können sich die Heizstäbe wärmebedingt verschieben.

Eine zweckmäßige Ausführung ist dadurch gekennzeichnet, daß die Schottbleche einen U-Querschnitt mit sich in Richtung der Rahmenseiten erstreckenden U-Schenkeln und einem U-Steg mit Durchtrittsöffnungen für die Haltestangen sowie die Heizstäbe aufweisen. Damit die aufzuheizende Luft auf einem möglichst langen Weg an Heizstäben vorbeigeführt wird, können die Heizkerne ein sich in Richtung der Rahmenlängsseiten erstreckendes Mittelschott aufweisen, das aus einer Mehrzahl mit gegenseitigem Abstand an einer Haltestange befestigten Teilschotten besteht. Durch diese Aufteilung des Mittelschottes wird verhindert, daß das Mittelschott sich unter der Wirkung von wärmebedingten Spannungen wellt. Die Schottbleche mit ihren U-Schenkeln werden im Bereich der Abstandsspalte der Teilschotte angeordnet, so daß die beiden durch das Mittelschott getrennten Luftkanäle auch strömungstechnisch voneinander getrennt sind, wenn beidseits des Mittelschotts Heizstäbe angeordnet sind.

Zur Isolierung sind die Heizkerne jeweils mit einer Isolierhaube abgedeckt, die einen U-Querschnitt aufweist. Die Isolierhaube weist vorzugsweise eine äußere und eine innere Abdeckung für das dazwischen eingeschlossene Isoliermaterial auf, so daß Flusen oder kleine Partikel des Isoliermaterials vom Luftstrom nicht mitgenommen werden können. Die innere Abdeckung besteht zweckmäßigerweise aus mit gegenseitigem Abstand angeordneten Abdeckungsabschnitten, um Wellungen infolge wärmebedingter Spannungen zu vermeiden. Zusätzlich können die Heizkerne im Bereich des Festlagerblechs und/oder des Loslagerblechs mit Frischluft kühlbare Kühlzonen aufweisen.

Im folgenden werden ein in der Zeichnung dargestellte Ausführungsbeispiele der Erfindung erläutert; es zeigen:
- Fig. 1: schematisch einen Querschnitt durch einen Rahmenholm eines elektrisch beheizten Schrumpfrahmens,
- Fig. 2: einen Schnitt in Richtung II-II durch den Gegenstand nach Fig. 1,
- Fig. 3: schematisch in perspektivischer Darstellung und mit auseinandergezogenen Teilen einen Schrumpfrahmen,

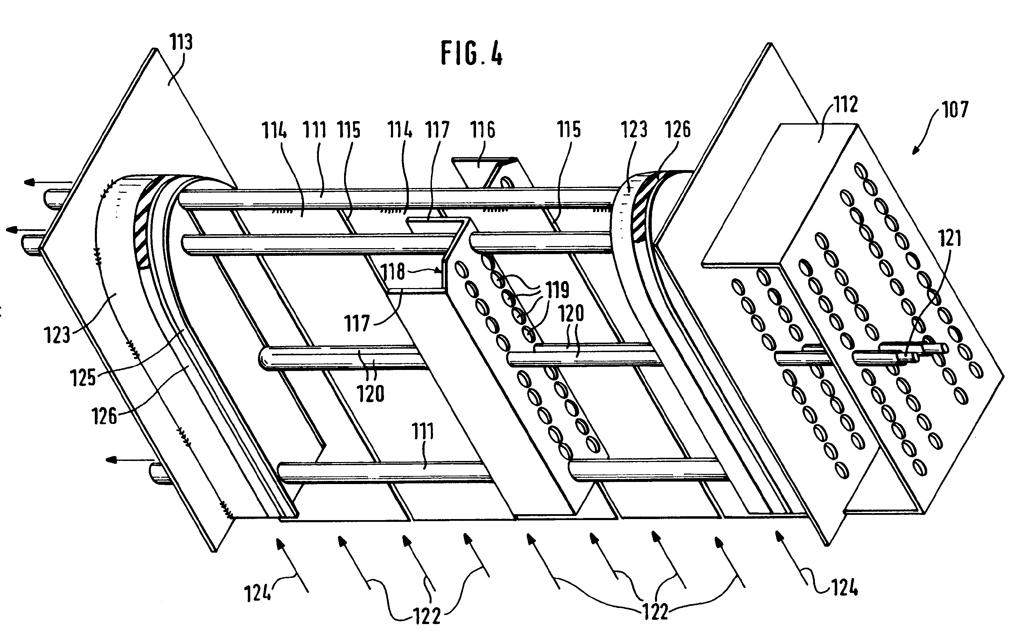

- Fig. 4: schematisch in perspektivischer Darstellung einen Heizkern.

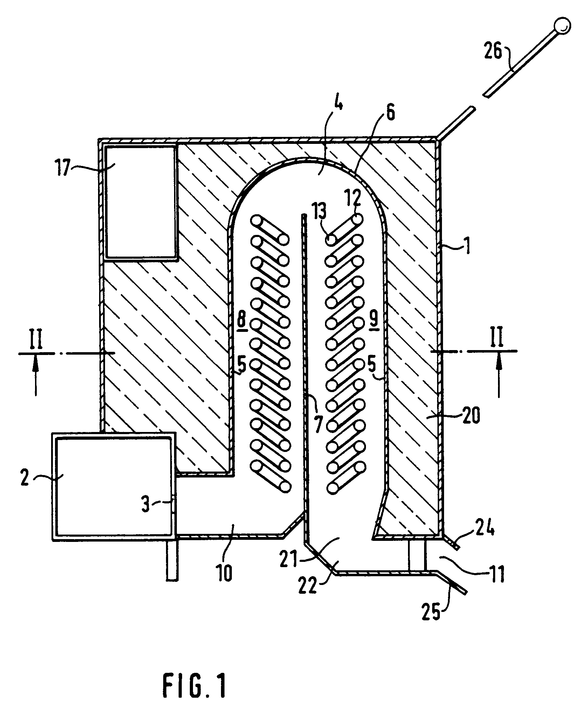

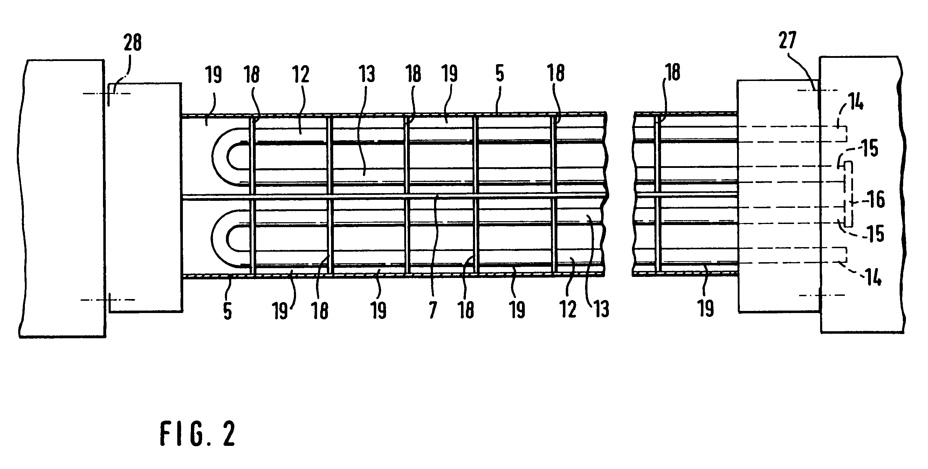

Der in den Figuren 1 und 2 teilweise dargestellte Schrumpfrahmen dient zum Schrumpfen von Schrumpfhauben oder -folien, die einen Gutstapel, insbesondere einen palettierten Gutstapel umgeben. Der Schrumpfrahmen besteht aus Rahmenholmen 1, die einen rechteckigen bis quadratischen Querschnitt besitzen. Die Rahmenholme 1 begrenzen innenseitig eine Öffnung für den Gutstapel . Diese Öffnung befindet sich in Fig. 1 auf der rechten Seite.

An jedem Rahmenholm 1 erstreckt sich an seinem unteren Außenbereich ein Luftverteilkanal 2, der an einen nicht dargestellten Lufteinlaß mit Gebläse angeschlossen ist. Alle Luftverteilkanäle 2 der Rahmenholme 1 können an einen gemeinsamen Lufteinlaß angeschlossen sein. Der Luftverteilkanal 2 weist mehrere Luftübergangsöffnungen 3 auf, von denen zumindest einige verstellbare Öffnungsquerschnitte besitzen können.

Im Rahmenholm 1 ist aufrecht stehend ein unten offener Schacht 4 angeordnet, dessen Schachtwände 5 am oberen Ende des Schachtes 4 über einen Halbkreisbogen 6 miteinander verbunden sind. Mittig im Schacht 4 befindet sich eine Trennwand 7, die sich in Längsrichtung des Schachtes 4 erstreckt und von seinem unteren offenen Ende ausgeht sowie mit Abstand vor dem Halbkreisbogen 6 endet. Die Trennwand 7 definiert im Schacht 4 zwei Abschnitte 8, 9 des Strömungsweges für die aufzuheizende Luft. Diese Luft gelangt über die Luftübergangsöffnungen 3 aus dem Luftverteilkanal 2 in einen dem Abschnitt 8 vorgeschalteten Kanalabschnitt 10, durchströmt die Abschnitte 8, 9 und tritt aus einer den Heißluftauslaß bildenen Schlitzdüse 11 an der Innenseite des Rahmenholms 1 aus.

Die Luft wird auf ihrem Strömungsweg durch den Schacht 4 erwärmt, und zwar mit Hilfe von elektrisch beheizbaren Heizelementen, die als U-förmige Heizstäbe ausgebildet sind, deren U-Schenkel 12, 13 sich in Längsrichtung des Schachtes 4 bzw. des Rahmenholms 1 erstrecken. Dadurch liegen die beiden Anschlußenden 14, 15 jedes Heizstabes etwa in der gleichen Querschnittsebene des Rahmenholms 1. Gleichpolige Anschlußenden 14 bzw. 15 der in den Abschnitten 8, 9 des Schachtes 4 angeordneten Heizstäbe sind über Stromschienen 16 miteinander verbunden. Die elektrische Versorgung der Stromschienen erfolgt über Leitungen, die in einem außenseitig am Rahmenholm 1 angeordneten Kabelkanal 17 verlegt sind.

Die Heizstäbe sind mit ihren U-Schenkeln 12, 13 an Schotten 18 abgestützt, die sich parallel zu der in Fig. 1 dargestellten Querschnittsebene erstrecken. Bei der dargestellten Ausführung sind die Heizstäbe auf einer Mehrzahl von Schotten 18 abgestützt, die sich zwischen der Trennwand 7 und den Schachtwänden 5 sowie bei der dargestellten Ausführung auch bis durch den Kanalabschnitt 10 und bis zur Schlitzdüse 11 erstrecken. Damit ist der Strömungsweg der aufzuheizenden Luft in eine Mehrzahl von zueinander parallelen Teilkanälen 19 aufgeteilt.

Im übrigen ist die Anordnung der Heizstäbe mit ihren U-Schenkeln 12, 13 so, daß die U-Schenkel 12, 13 in der Querschnittsprojektion nach Fig. 1 unter einem Winkel von 45 ° zur Trennwand 7 angeordnet sind, wobei der Abstand der Stabmitten gleich oder größer als der zweifache Stabdurchmesser ist. Das ermöglicht eine dichte Anordnung von Heizstäben in den Abschnitten 8, 9 des Schachtes 4 und damit eine hohe Leistungsdichte. Die Schachtwände 5 und die Trennwand 7 bestehen aus Metallblechen, die durch die von den Heizstäben abgegebene Wärmestrahlung beaufschlagt sind und ihrerseits Wärmestrahlung an die durchströmende Luft abgeben. Um Wärmeverluste weitgehend zu vermeiden, ist der Schacht 4 insgesamt in Isoliermaterial 20 eingebettet.

Am unteren Ende des Abschnittes 9 des Schachtes 4 befindet sich eine Einschnürung 21, die in einen der Schlitzdüse 11 vorgeschalteten Kanalabschnitt 22 mündet. Die Einschnürung, die bei der dargestellten Ausführung von einem mit ca. 15 ° in Richtung auf die Trennwand 7 abgewinkelten unteren Ende der Schachtwand 5 gebildet wird sowie der Kanalabschnitt 22 sind so ausgebildet, daß der Querschnitt der Schlitzdüse 11 gegen die von den Heizstäben unmittelbar abgegebene Wärmestrahlung abgeschirmt ist.

Die Schlitzdüse 11 ist oberseitig und unterseitig von Leitblechen 24, 25 begrenzt, die sich bei der dargestellten Ausführung unter einem Winkel von ca. 30 ° zur Horizontalen nach unten erstrecken. Das obere Leitblech 24 ist kürzer als das untere Leitblech 25. Nicht dargestellt ist, daß die Winkelstellung zumindest eines der Leitbleche 24, 25 veränderbar sein kann. Gegebenenfalls kann mit dem verstellbaren Leitblech auch die Schlitzdüse 11 vollkommen verschlossen werden.

In Fig. 1 erkennt man ferner am oberen rechten Rand des Rahmenholms Luftstauelemente 26, die sich bis über die im Rahmen gebildete Öffnung erstrecken. Diese Luftstauelemente 26, die auch verstellbar sein können, sollen verhindern, daß bei zu großem Abstand zwischen den Innenseiten des Rahmens und den Seiten des mit der einzuschrumpfenden Schrumpfhaube überzogenen Gutstapel die aus der Schlitzdüse 11 austretende Heißluft ungenutzt nach oben entweicht. Wenn die Luftstauelemente 26 schwenkbar sind, können sie auch in eine vertikale Position gebracht werden und als Heißluftführung dienen. Bei einer nicht dargestellten Ausführung kann auf dem Rahmen auch eine Haube angeordnet sein, in der während der Stillstandzeit Heißluft gespeichert wird, so daß während des Arbeitstaktes ein größeres Heißluftvolumen direkt an die Schrumpfhaube bzw. -folie herangeführt werden kann.

Aus Fig. 2 entnimmt man noch, daß der Schacht 4 mit dem Trennblech 7, den Schotten 18 und den Heizstäben 12, 13 ein einheitliches Bauteil ist, welches austauschbar in einem Rahmenholm 1 untergebracht und darin mit einem Festlager 27 sowie einem Loslager 28 gehalten ist.

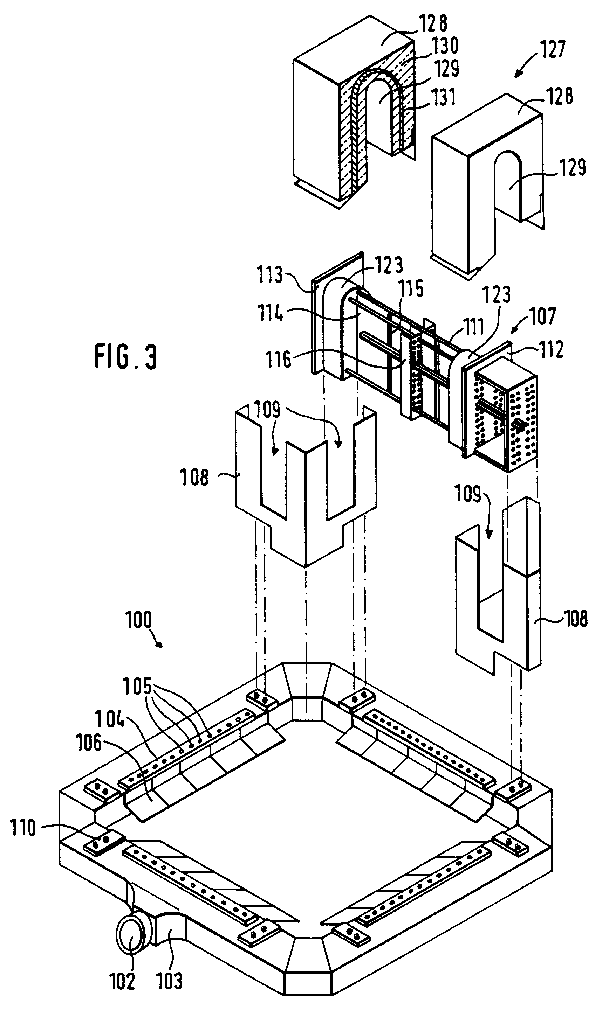

Der in den Figuren 2 und 3 dargestellte Schrumpfrahmen 100 besitzt einen rechteckigen bis quadratischen Grundriß. Er besteht aus einem Rohrrahmen mit flachliegendem Rechteckquerschnitt, der an einer Seite einen Lufteinlaß 102 mit anschließendem trichterförmigen Einlauf 103 aufweist. Im Bereich der Rahmeninnenseiten sind Luftleisten 104 mit Luftaustrittsöffnungen 105 für die austretende Heißluft vorgesehen. Unterhalb der Luftleisten befinden sich Heißluftleitbleche 106.

In den Rahmenrohren des Schrumpfrahmens 100 sind Heizkerne 107 untergebracht. Diese Heizkerne 107 sind im Bereich der Rahmenecken an winkelförmigen Tragelementen 108 abgestützt, die dazu vertikale Einführungsschlitze 109 besitzen. Die Heizkerne 107 werden in den Tragelementen 108 mit Hilfe von Befestigungsplatten 110 festgelegt, die auf der Oberseite des Schrumpfrahmens 100 angeordnet sind.

Jeder Heizkern 107 besteht aus mehreren, sich in Richtung der Rahmenseiten erstreckenden Haltestangen 111, die an einem Ende in einer vertikal ausgerichteten Festlagerplatte 112 befestigt sind und am anderen Ende in einer Loslagerplatte 113 lediglich abgestützt und längsverschieblich geführt sind. An einer oberen, in der Mittelebene des Heizkerns 107 angeordneten Haltestange 111 sind mehrere Teilschotte 114 befestigt, zwischen denen sich Abstandsspalte 115 befindet und die ein gemeinsames Mittelschott definieren, welches den Heizkern 107 im wesentlichen teilt. Beidseits der Teilschotte 107 sind Schottbleche 116 angeordnet, die einen U-Querschnitt mit sich in Richtung der Rahmenseiten U-Schenkeln 117 und einem U-Steg 118 mit Durchtrittsöffnungen 119 aufweisen. Die innenliegenden U-Schenkel 117 sind vor den Abstandsspalten 115 angeordnet. In den Durchtrittsöffnungen 119 sind einerseits die Haltestangen 111 und andererseits elektrisch beheizte Heizstäbe 120 geführt.

Die Heizstäbe 120 sind U-förmig ausgebildet und ihre Enden sind an der Festlagerplatte 112 befestigt. Im übrigen können sich die Heizstäbe 120 nach Maßgabe ihrer wärmebedingten Ausdehnung innerhalb des Heizkerns 107 verschieben. Die Heizstäbe 120 ragen mit Anschlüssen 121 über die Festlagerplatte 112 vor.

Die aufzuheizende Luft wird in Richtung der Pfeile 122 auf einer Seite der Teilschotte 114 zugeführt und auf der anderen Seite wieder abgeführt. Sowohl im Bereich der Festlagerplatte 112 als auch im Bereich der Loslagerplatte 113 sind innenseitig Kühlkammern 123 vorgesehen, denen Kühlluft in Richtung des Pfeils 124 zugeführt wird.

Die Kühlkammern 123 besitzen ein äußeres Abschlußblech 125, auf welchem ein Dichtstreifen 126 angeordnet ist. Dieser Dichtstreifen 126 dient zur Abdichtung gegenüber einer Isolierhaube 127 mit U-förmigem Innenquerschnitt, die zwischen Festlagerplatte 112 und Loslagerplatte 113 auf den Heizkern 107 aufgesetzt wird. Die Isolierhaube 127 besitzt eine äußere Abdeckung 128 und eine innere Abdeckung 129 aus mit gegenseitigem Abstand angeordneten Abdeckungsabschnitten. Isoliermaterial 130 und eine darin eingebettete Aluminiumfolie 131 sind zwischen der äußeren Abdeckung 128 und der inneren Abdeckung 129 gehalten.

Die Heizkerne 107 lassen sich einfach montieren und zu Reparatur- bzw. Wartungszwecken auch einfach aus dem Schrumpfrahmen 100 entnehmen. Wärmebedingte Verformungen der einzelnen Teile der Heizkerne 107 oder der Isolierhauben 127 sind nicht zu befürchten, da alle Teile, die höheren Temperaturen ausgesetzt sind, gegeneinander beweglich sind.

## Patentansprüche

1. Schrumpfrahmen mit einem an ein Gebläse anschließbaren Lufteinlaß, daran anschließenden Luftführungskanälen (8, 9), in denen elektrisch beheizbare Heizelemente (12, 13) angeordnet sind, und mit einem an den Innenseiten des Schrumpfrahmens angeordneten Luftauslaß (11) für die Heißluft, gekennzeichnet durch einen einseitig offenen Schacht (4) im Rahmen (1) mit einer darin angeordneten Trennwand (7), die von der Schachtöffnung ausgeht und mit Abstand vor dem geschlossenen Schachtende (6) endet, wobei zur Bildung eines V-förmigen Strömungsweges ein zwischen der Trennwand (7) und einer Schachtwand (5) gebildeter Abschnitt (8) des Strömungsweges an den Lufteinlaß und der andere Abschnitt (9) an den Luftauslaß angeschlossen ist und wobei die Heizelemente (12, 13) als Heizstäbe ausgebildet sind, die sich in Längsrichtung des Schachtes (4) erstrecken und die an wenigstens zwei Schotten (18) abgestützt sind, welche zwischen der Trennwand (7) und den Schachtwänden (5) angeordnet sind.

2. Schrumpfrahmen nach Anspruch 1, dadurch gekennzeichnet, daß der Schacht (4) außenseitig in Isoliermaterial (20) eingebettet ist.

3. Schrumpfrahmen nach einem der Ansprüche 1 oder 2, dadurch gekennzeichnet, daß in beiden Abschnitten (8, 9) Heizelemente (12, 13) angeordnet sind.

4. Schrumpfrahmen nach einem der Ansprüche 1 bis 3, dadurch gekennzeichnet, daß die Anschlußenden (14, 15) der Heizstäbe (12, 13) elektrisch leitend miteinander verbunden sind.

5. Schrumpfrahmen nach einem der Ansprüche 1 bis 4, dadurch gekennzeichnet, daß die Heizstäbe (12, 13) U-förmig ausgebildet sind und die gleichpoligen Anschlußenden (14, 15) benachbarter Heizstäbe durch Stromschienen (16) miteinander verbunden sind.

6. Schrumpfrahmen nach einem der Ansprüche 1 bis 5, dadurch gekennzeichnet, daß die Heizstäbe bzw. ihre U-Schenkel (12, 13) in einer Querschnittsprojektion des Schachtes (4) unter einem Winkel zur Trennwand (7) angeordnet sind, wobei der Abstand der Stabmitten gleich oder größer als der zweifache Stabdurchmesser ist.

7. Schrumpfrahmen nach einem der Ansprüche 1 bis 6, dadurch gekennzeichnet, daß der Schacht (4) aufrecht stehend mit unten angeordneter Schachtöffnung im Rahmen (1) angeordnet ist.

8. Schrumpfrahmen nach einem der Ansprüche 1 bis 6, dadurch gekennzeichnet, daß der Schacht (4) hoirzontal liegend oder unter einem Winkel zur Horizontalen im Rahmen (1) angeordnet ist.

9. Schrumpfrahmen nach einem der Ansprüche 1 bis 8, dadurch gekennzeichnet, daß der Luftauslaß als sich längs der Innenseiten des Rahmens (1) erstreckende Schlitzdüse (11) ausgebildet ist, die beidseitig von Leitblechen (24, 25) begrenzt ist, die unter einem Winkel zur Rahmenebene angeordnet sind, wobei zwischen der Schlitzdüse (11) und dem Schacht (4) ein Kanalabschnitt (21, 22) angeordnet ist, der einen direkten Austritt der von den Heizstäben (12, 13) abgegebenen Wärmestrahlung verhindert.

10. Schrumpfrahmen nach einem der Ansprüche 1 bis 9 , dadurch gekennzeichnet, daß die Winkelstellung zumindest eines der Leitbleche (24, 25) veränderbar ist.

11. Schrumpfrahmen nach einem der Ansprüche 1 bis 10, dadurch gekennzeichnet, daß am Rahmen (1) in Richtung auf den Gutstapel verstellbare Luftstauelemente (26) angeordnet sind.

12. Schrumpfrahmen nach einem der Ansprüche 1 bis 11, dadurch gekennzeichnet, daß der Rahmen (1) senkrechte Wände als Heißluftführung aufweist.

13. Schrumpfrahmen nach einem der Ansprüche 1 bis 12, dadurch gekennzeichnet, daß auf dem Rahmen (1) eine Haube angeordnet ist.

14. Schrumpfrahmen nach einem der Ansprüche 1 bis 13, dadurch gekennzeichnet, daß im Außenbereich des Rahmens (1) ein vom Lufteinlaß ausgehender Luftverteilkanal (2) angeordnet ist, der Luftübergangsöffnungen (3) zu den zwischen den Schotten (18) gebildeten Teilkanälen (19) aufweist.

15. Schrumpfrahmen nach Anspruch 14, dadurch gekennzeichnet, daß die Größe der Luftübergangsöffnungen (3) veränderbar ist.

16. Schrumpfrahmen nach einem der Ansprüche 1 bis 15, dadurch gekennzeichnet, daß die Heizstäbe (20) sich im wesentlichen parallel zu den Rahmenseiten erstrecken und in wärmeisolierten Heizkernen (7) mit Luftführungskanälen angeordnet sind, wobei die Heizstäbe (20) mit einem Ende an den Heizkernen (7) befestigt und im übrigen nach Maßgabe ihrer Wärmeausdehnung in den Heizkernen (7) verschiebbar sind.

17. Schrumpfrahmen nach Anspruch 16, dadurch gekennzeichnet, daß die Heizkerne (7) Haltestangen (11) aufweisen, die sich in Richtung der Rahmenseiten erstrecken und die an einem Ende an einem Festlagerblech (12) befestigt sowie am anderen Ende in einem Loslagerblech (13) geführt sind.

18. Schrumpfrahmen nach Anspruch 16 oder 17, dadurch gekennzeichnet, daß die Heizstäbe (20) am Festlagerblech (12) befestigt und im übrigen an Schottblechen (16) abgestützt sind, die von den Haltestangen (11) getragen sind.

19. Schrumpfrahmen nach einem der Ansprüche 16 bis 18, dadurch gekennzeichnet, daß die Schottbleche einen U-Querschnitt mit sich in Richtung der Rahmenseiten erstreckenden U-Schenkeln (17) und einem U-Steg (18) mit Durchtrittsöffnungen (19) für die Haltestangen (11) sowie die Heizstäbe (20) aufweisen.

20. Schrumpfrahmen nach einem der Ansprüche 16 bis 19, dadurch gekennzeichnet, daß die Heizkerne (7) ein sich in Richtung der Rahmenlängsseiten erstreckendes Mittelschott aufweisen, daß aus einer Mehrzahl von mit gegenseitigem Abstand an einer Haltestange (11) befestigten Teilschotten (14) besteht, und die Schottbleche (11) mit ihren U-Schenkeln (17) im Bereich der Abstandsspalte (15) der Teilschotte (14) angeordnet sind.

21. Schrumpfrahmen nach einem der Ansprüche 16 bis 20, dadurch gekennzeichnet, daß beidseits des Mittelschotts Heizstäbe (20) angeordnet sind.

22. Schrumpfrahmen nach einem der Ansprüche 16 bis 21, dadurch gekennzeichnet, daß die Heizkerne (7) jeweils mit einer Isolierhaube (27) abgedeckt sind, die einen U-Querschnitt aufweist.

23. Schrumpfrahmen nach einem der Ansprüche 16 bis 22, dadurch gekennzeichnet, daß die Isolierhaube (27) eine äußere (28) und eine innere Abdeckung (29) für das dazwischen eingeschlossene Isoliermaterial (30) aufweist, wobei die innere Abdeckung (29) aus mit gegenseitigem Abstand angeordneten Abdeckungsabschnitten besteht.

24. Schrumpfrahmen nach einem der Ansprüche 16 bis 23, dadurch gekennzeichnet, daß die Heizkerne (7) im Bereich des Festlagerblechs (12) und/oder des Loslagerblechs (13) mit Frischluft kühlbare Kühlzonenlagerblechs (13) mit Frischluft kühlbare Kühlzonen (23) aufweisen.

## Claims

1. Shrinking frame, having an air inlet, which is communicatable with a fan, air flow channels (8, 9) which communicate therewith and in which electrically heatable heating elements (12, 13) are disposed, and an air outlet (11) for the heated air, which is disposed on the internal surfaces of the shrinking frame, characterised by the feature that, in the frame (1), a shaft (4), which is open at one end with a dividing wall (7) disposed therein, extends from the shaft opening and terminates with a spacing before the closed shaft end (6), a portion (8) of the flow path communicating with the air inlet to form a V-shaped flow path, which portion is formed between the dividing wall (7) and a shaft wall (5), and the other portion (9) communicating with the air outlet; the heating elements (12, 13) being heating rods which extend in the longitudinal direction of the shaft (4) and are supported on at least two partitions (18), which are disposed between the dividing wall (7) and the shaft walls (5).

2. Shrinking frame according to claim 1, characterised in that the shaft (4) is embedded in insulating material (20) at its external surface.

3. Shrinking frame according to one of claims 1 or 2, characterised in that heating elements (12, 13) are disposed in the two portions (8, 9).

4. Shrinking frame according to one of claims 1 to 3, characterised in that the connection ends (14, 15) of the heating rods (12, 13) are interconnected in an electrically conductive manner.

5. Shrinking frame according to one of claims 1 to 4, characterised in that the heating rods (12, 13) have a U-shaped configuration, and the identical terminal connection ends (14, 15) of neighbouring heating rods are interconnected by currect-collecting bars (16).

6. Shrinking frame according to one of claims 1 to 5, characterised in that the heating rods or their U-shaped legs (12, 13) are disposed in a cross-sectional projection of the shaft (4) at an angle relative to the dividing wall (7), the spacing between the rod centres being identical to or greater than twice the rod diameter.

7. Shrinking frame according to one of claims 1 to 6, characterised in that the shaft (4) is vertically disposed in the frame (1) with an aperture provided in the lower end of the shaft.

8. Shrinking frame according to one of claims 1 to 6, characterised in that the shaft (4) is disposed in the frame (1) so as to lie horizontally or at an angle relative to the horizontal.

9. Shrinking frame according to one of claims 1 to 8, characterised in that the air outlet is a slotted nozzle (11), which extends longitudinally of the internal surfaces of the frame (1) and is defined at each end by baffle plates (24, 25), which are disposed at an angle relative to the plane of the frame, a channel portion (21, 22) being disposed between the slotted nozzle (11) and the shaft (4) and preventing the heat radiation, which is dissipated by the heating rods (12, 13), from emerging directly.

10. Shrinking frame according to one of claims 1 to 9, characterised in that the angular position of at least one of the baffle plates (24, 25) is variable.

11. Shrinking frame according to one of claims 1 to 10, characterised in that air blocking elements (26), which are displaceable in a direction towards the stack of goods, are disposed on the frame (1).

12. Shrinking frame according to one of claims 1 to 11, characterised in that the frame (1) has vertical walls serving to guide the hot air.

13. Shrinking frame according to one of claims 1 to 12, characterised in that a hood is disposed on the frame (1).

14. Shrinking frame according to one of claims 1 to 13, characterised in that an air distribution channel (2), which extends from the air inlet, is disposed in the external region of the frame (1) and has air transfer apertures (3) extending to the partial channels (19), which are formed between the partitions (18).

15. Shrinking frame according to claim 14, characterised in that the size of the air transfer apertures (3) is variable.

16. Shrinking frame according to one of claims 1 to 15, characterised in that the heating rods (20) extend substantially parallel to the sides of the frame and are disposed in heat-insulated heating cores (7) provided with air flow channels, the heating rods (20) being mounted with one end on the heating cores (7) and being displaceable, moreover, in accordance with their thermal expansion in the heating cores (7).

17. Shrinking frame according to claim 16, characterised in that the heating cores (7) have retaining rods (11), which extend in a direction towards the sides of the frame, are mounted at one end on a fixed bearing plate (12) and are guided at the other end in a detachable bearing plate (13).

18. Shrinking frame according to claim 16 or 17, characterised in that the heating rods (20) are mounted on the fixed bearing plate (12) and are supported, moreover, on partition plates (16), which are carried by the retaining rods (11).

19. Shrinking frame according to one of claims 16 to 18, characterised in that the partition plates have a U-shaped cross-section provided with U-shaped legs (17), extend in a direction towards the sides of the frame, and a U-shaped web (18) provided with through-apertures (19) for the retaining rods (11) and the heating rods (20).

20. Shrinking frame according to one of claims 16 to 19, characterised in that the hearing cores (7) have a central partition which extends in a direction towards the longitudinal ends of the frame and comprises a plurality of partial partitions (14), which are mounted on a retaining rod (11) with mutual spacings therebetween, and the partition plates (11) are disposed with their U-shaped legs (17) in the region of the spacer gaps (15) in the partial partitions (14).

21. Shrinking frame according to one of claims 16 to 20, characterised in that heating rods (20) are disposed at each end of the central partition.

22. Shrinking frame according to one of claims 16 to 21, characterised in that the heating cores (7) are each covered by a respective insulating hood (27), which has a U-shaped cross-section.

23. Shrinking frame according to one of claims 16 to 22, characterised in that the insulating hood (27) has an external covering (28) and an internal covering (29) for the insulating material (30) enclosed therebetween, the internal covering (29) comprising covering portions which are disposed with mutual spacings therebetween.

24. Shrinking frame according to one of claims 16 to 23, characterised in that the heating cores (7) in the region of the fixed bearing plate (12) and/or of the detachable bearing plate (13) have cooling zones (23) which are coolable with fresh air.

## Revendications

1. Cadre de rétraction avec une entrée d'air qui peut être raccordée à une soufflante, des conduits d'air (8,9) qui s'y raccordent dans lesquels sont disposés des éléments de chauffage (12,13), pouvant être chauffés électriquement et avec une sortie d'air (11) pour l'air chaud qui est disposée sur les côtés intérieurs du cadre de rétraction, caractérisé par un puits (4), qui, ouvert d'un côté, est situé dans le cadre (1) avec une paroi de séparation (7) qui y est disposée, qui part de l'ouverture du puits et s'arrête à distance devant l'extrémité du puits (6) fermé, afin de réaliser un trajet d'écoulement en forme de V, un tronçon (8) du trajet d'écoulement, étant formé entre la paroi de séparation (7) et une paroi de puits (5), qui est raccordé à l'entrée d'air et l'autre tronçon (9) à une sortie d'air, les éléments de chauffage (12,13) étant configurés en tant que barres de chauffage qui s'étendent en sens longitudinal du puits (4) et qui sont soutenues sur au moins deux cloisons (18) lesquelles sont disposées entre la paroi de séparation (7) et les parois du puits (5).

2. Cadre de rétraction selon la revendication 1, caractérisé en ce que le puits (4) est encastre du côté externe dans une matière isolante (20).

3. Cadre de rétraction selon l'une des revendications 1 ou 2 caractérisé en ce que des éléments de chauffage (12,13) sont disposés dans les deux tronçons (8,9).

4. Cadre de rétraction selon l'une des revendications 1 à 3 caractérisé en ce que les extrémités du raccord (14,15) des barres de chauffage (12,13), sont reliées mutuellement en étant électro-conductrices.

5. Cadre de rétraction selon l'une des revendications 1 à 4 caractérisé en ce que les barres de chauffage (12,13) sont configurées en forme de U et que les extrémités du raccord (14,15) des barres de chauffage voisines, de même polarité, sont reliées mutuellement par l'intermédiaire de barres conductrices (16).

6. Cadre de rétraction selon l'une des revendications 1 à 5, caractérisé en ce que les barres de chauffage ou leurs côtés en U (12,13) sont disposés, dans une représentation du puits (4) en coupe transversale, sous un angle par rapport à la paroi de séparation (7),la distance des milieux des barres étant égale ou plus grande que le double du diamètre de la barre.

7. Cadre de rétraction selon l'une des revendications 1 à 6, caractérisé en ce que le puits (4) est disposé dans le cadre (1) en position debout avec l'ouverture du puits placée en bas.

8. Cadre de rétraction selon l'une des revendications 1 à 6, caractérisé en ce que le puits (4) est disposé dans le cadre (1) en position horizontale ou sous un angle par rapport à l'horizontale.

9. Cadre de rétraction selon l'une des revendication 1 à 8, caractérisé en ce que la sortie d'air, qui s'étend le long des côtés intérieurs du cadre (1), est configurée en tant que tuyère à fente (11) qui est délimitée de part et d'autre par des tôles de guidage (24,25) qui sont disposées sous un angle par rapport au plan du cadre, un tronçon de canal (21,22) étant disposé entre la tuyère à fente (11) et le puits (4), qui empêche une sortie directe du rayonnement thermique délivré par les barres de chauffage (12,13).

10. Cadre de rétraction selon l'une des revendications 1 à 9, caractérisé en ce que la position angulaire au moins d'une des tôles de guidage (24,25) est modifiable.

11. Cadre de rétraction selon l'une des revendications 1 à 10, caractérisé en ce que des éléments de retenue d'air (26) réglables sont disposés au cadre (1) en direction de la pile de matériau.

12. Cadre de rétraction selon l'une des revendications 1 à 11, caractérisé en ce que le cadre (1) présente des parois verticales en tant que guide d'air chaud.

13. Cadre de rétraction selon l'une des revendications 1 à 12, caractérisé en ce qu'une calotte est placée sur le cadre (1).

14. Cadre de rétraction selon l'une des revendications 1 à 13, caractérisé en ce que, partant de l'entrée d'air, un canal de distribution d'air (2), est disposé dans la zone externe du cadre (1) qui, entre les cloisons (18), présente des orifices de passage d'air (3) vers les canaux partiels (19).

15. Cadre de rétraction selon la revendication 14, caractérisé en ce que la grandeur des orifices de passage (3) d'air est modifiable.

16. Cadre de rétraction selon l'une des revendications 1 à 15, caractérisé en ce que des barres de chauffage (20), s'étendent pour l'essentiel parallèlement par rapport aux côtés du cadre et sont, avec des conduits d'air, disposées dans des noyaux chauffants (7) calorifuges, les barres de chauffage (20) étant fixées avec une extrémité aux noyaux chauffants (7) et hormis cela, en proportion de leur dilatation thermique, peuvent être déplacées dans les noyaux chauffants (7).

17. Cadre de rétraction selon la revendication 16, caractérisé en ce que les noyaux chauffants (7) présentent des barres de soutien (11) qui s'étendent en direction des côtés du cadre et qui, à une extrémité, sont fixées à une tôle d'appui fixe (12) et, à l'autre extrémité, sont guidées dans la tôle d'appui mobile (13).

18. Cadre de rétraction selon la revendication 16 ou 17, caractérisé en ce que les barres de chauffage (20) sont fixées à la tôle d'appui fixe (12) et hormis cela sont soutenues aux tôles de cloison (16) qui sont portées par les barres de soutien (11).

19. Cadre de rétraction selon l'une des revendication 16 à 18, caractérisé en ce que les tôles de cloison présentent une coupe transversale en U avec des côtés en U (17) qui s'étendent en direction des côtés du cadre et une traverse en U (18) avec des orifices de passage (19), destinées aux barres de soutien (11) ainsi que des barres de chauffage (20).

20. Cadre de rétraction selon l'une des revendications 16 à 19, caractérisé en ce que les noyaux chauffants (7) présentent une cloison centrale qui s'étend en direction des grands côtés du cadre qui est constituée d'une multitude de cloisons partielles (14), fixées à une barre de soutien (11) à distance réciproque et les tôles de cloison (11) avec leurs côtés en U (17) sont disposées dans la région de la fente d'écartement (15) des cloisons partielles (14).

21. Cadre de rétraction selon l'une des revendications 16 à 20 caractérisé en ce que des barres de chauffage (20) sont disposées de part et d'autre de la cloison médiane.

22. Cadre de rétraction selon l'une des revendications 16 à 21, caractérisé en ce que les noyaux chauffants (7) sont recouverts à chaque fois avec une calotte isolante (27) qui présente une coupe transversale en U.

23. Cadre de rétraction selon l'une des revendications 16 à 22, caractérisé en ce que la calotte isolante (27) présente un recouvrement extérieur (28) et un recouvrement intérieur (29), destinés à la matière isolante (30) qui y est enfermée, le recouvrement intérieur (29) étant constitué de tronçons de recouvrement, disposés à distance mutuelle.

24. Cadre de rétraction selon l'une des revendications 16 à 23, caractérisé en ce que les noyaux chauffants (7) dans la région de la tôle d'appui fixe (12) et/ou de la tôle d'appui mobile (13) disposent de tôles d'appuis pour des zones de refroidissement qui peuvent être refroidies avec de l'air frais, de zones de refroidissement (23), pouvant être refroidies moyennant de l'air frais.
